# FASCICULE DE BREVET EUROPEEN

(11) **EP 3 197 689 B1**
(45) Date de publication et mention de la délivrance du brevet: **07.11.2018**
(21) Numéro de dépôt: 15763934.5
(22) Date de dépôt: 18.09.2015
(51) Int. Cl.: B60C 15/00, B60C 15/02, B60C 3/04, B60C 15/06

(54) **PNEUMATIQUE AYANT UNE PLUS GRANDE RÉSISTANCE AU DÉCOINCEMENT**
REIFEN MIT HÖHEREM WIDERSTAND GEGENÜBER WULSTABDRÜCKEN
TYRE HAVING GREATER RESISTANCE TO UNSEATING

(30) Priorité: 24.09.2014 FR 1459002
(43) Date de publication de la demande: 02.08.2017
(73) Titulaire: Compagnie Générale des Etablissements Michelin, 63000 Clermont-Ferrand (FR)
(72) Inventeur: BORDOZ, Francis, 63040 Clermont-Ferrand Cedex 9 (FR); PACHOUD, Pascal, 63040 Clermont-Ferrand Cedex 9 (FR); MAUBRE, Lionel, 63040 Clermont-Ferrand Cedex 9 (FR)
(74) Mandataire: Millanvois, Patrick Jacques Jean
(86) Numéro de dépôt international: PCT/EP2015/071394
(87) Numéro de publication internationale: WO 2016/046069

(56) Documents cités:
- EP-A1- 2 455 237
- EP-A2- 1 013 482
- EP-A2- 1 433 624
- WO-A1-2004/065141
- US-B1- 6 709 540

## Description

### DOMAINE DE L'INVENTION

La présente invention concerne les pneumatiques pour tout type de véhicule, plus particulièrement les pneumatiques à basse pression. Par basse pression, on entend, par exemple et de façon non exhaustive, une pression de l'ordre de 1.5 bar pour un pneumatique de véhicule de tourisme, de 1.2 bar pour un pneumatique de véhicule de tourisme de type sportif et de 0.6 bar pour un véhicule agraire. Cette basse pression peut être la conséquence d'une perte d'étanchéité ou le résultat d'un choix délibéré pour l'obtention d'une performance particulière, telle que, par exemple, l'adhérence pour un véhicule de tourisme de type sportif.

Un pneumatique comprend un sommet comprenant une bande roulement destinée à venir en contact avec le sol par l'intermédiaire d'une surface de roulement, deux bourrelets destinés à venir en contact avec une jante et deux flancs reliant le sommet aux bourrelets.

### ARRIERE-PLAN

La facilité avec laquelle un pneumatique décoince, c'est-à-dire avec laquelle le bourrelet du pneumatique se déplace sur la jante, puis déjante, c'est-à-dire se détache de la jante lorsque qu'un effort transversal s'exerce sur le pneumatique fait partie des caractéristiques importantes du pneumatique pour la sécurité des passagers du véhicule.

Le décoincement est plus particulièrement un problème pour les pneumatiques à basse pression suivants :
- Les pneumatiques pour véhicules de type sportif dont on cherche à améliorer l'adhérence par une aire de contact augmentée en diminuant la pression d'usage,
- Les véhicules agricoles dont on cherche à diminuer l'impact sur le compactage des sols cultivés en diminuant la pression d'usage,
- Les pneumatiques de tourisme conçus pour fonctionner sur quelques centaines de kilomètres après une perte de pression,

Par exemple, pour les véhicules de tourisme, les organismes de normalisation ont élaboré, vis-à-vis du décoincement et du déjantage, des valeurs cibles à atteindre (comme par exemple dans la norme chinoise GB/T 2978-2008) et des méthodes de test correspondantes (comme par exemple la méthode préconisée dans la norme chinoise GB/T 4502-2009). Un exemple de méthode de test est aussi décrit dans le brevet US 3 662 597 selon lequel une forme conique est appliquée contre un flanc du pneumatique. La pression exercée contre le flanc est ensuite augmentée et le déplacement du flanc est enregistré. Une méthode d'essai similaire a été retenue dans le « Fédéral Motor Vehicle Safety Standard No.109 » de la NHTSA (National Highway Traffic Safety Administration), l'organisme fédéral de sécurité routière américain.

Ces préconisations de plus en plus exigeantes des organismes de normalisation, nécessitent de rendre ces pneumatiques encore plus résistants au décoincement et au déjantage.

Classiquement, on peut augmenter la résistance au décoincement en collant le pneumatique sur la jante de montage, mais cette solution a pour inconvénient de rendre très difficile le démontage du pneumatique. Il est également possible de modifier la géométrie de la jante et du pneumatique comme le montrent les documents EP103346 B1 ou EP1307351 B1 **ou** EP358490 A2**,** afin de rendre le décoincement plus difficile, mais cette approche nécessite une déstandardisation de la jante et parfois une modification coûteuse des moules de fabrication des pneumatiques. Par ailleurs différentes architectures sont mises au point pour résoudre différents problèmes cf. EP2455237A1 ledit document montrant un pneu selon le préambule de la revendication 1.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien.

Dans ce qui suit, les expressions « radialement intérieur à» et « radialement extérieur à» signifient respectivement « plus proche de l'axe de rotation du pneumatique, selon la direction radiale, que » et « plus éloigné de l'axe de rotation du pneumatique, selon la direction radiale, que ». Les expressions « axialement intérieur à» et « axialement extérieur à» signifient respectivement « plus proche du plan équatorial, selon la direction axiale, que » et « plus éloigné du plan équatorial, selon la direction axiale, que ». Une « distance radiale » est une distance par rapport à l'axe de rotation du pneumatique, et une « distance axiale » est une distance par rapport au plan équatorial du pneumatique. Une « épaisseur radiale » est mesurée selon la direction radiale, et une « largeur axiale » est mesurée selon la direction axiale.

L'expression «mélange caoutchouteux » désigne une composition de caoutchouc comportant au moins un élastomère et une charge.

### RESUME DE L'INVENTION

L'objectif principal de la présente invention est donc d'augmenter la résistance au décoincement d'un pneumatique sans rendre le montage et le démontage plus difficiles, et sans nécessiter une modification des jantes de montage utilisées habituellement.

Cet objectif est atteint par un pneumatique destiné à être monté sur une jante de montage, comprenant :
deux bourrelets, destinés à entrer en contact avec la jante de montage,_la jante de montage comprenant une portion sensiblement radiale ou side et une portion sensiblement axiale ou seat,
chaque bourrelet, ayant un point le plus radialement intérieur et positionné par rapport au side à une distance axiale D appelée largeur axiale au seat et comportant au moins un bourrage constitué par au moins une composition caoutchouteuse et au moins un élément circonférentiel de renforcement,
la section méridienne de l'élément circonférentiel de renforcement ayant un point le plus radialement intérieur, un point le plus radialement extérieur et un point le plus axialement intérieur, le point le plus radialement intérieur étant positionné à une distance radiale Z et à une distance axiale Y du point le plus radialement intérieur du bourrelet,
une armature de carcasse reliant les deux bourrelets et comprenant au moins une couche de carcasse s'étendant dans chaque bourrelet, radialement vers l'intérieur, jusqu'à une extrémité de couche de carcasse,
pour au moins un bourrelet, l'extrémité de couche de carcasse est positionnée radialement à l'intérieur du point de plus grande largeur axiale du pneumatique et axialement à l'extérieur du point le plus axialement intérieur de l'élément circonférentiel de renforcement,
pour ledit bourrelet, le rapport Y/D entre la distance axiale Y du point le plus radialement intérieur de l'élément circonférentiel de renforcement au point le plus radialement intérieur du bourrelet, et la largeur axiale du bourrelet au seat D, est au moins égal à 0,5,
pour ledit bourrelet, le rapport Z/D entre la distance radiale Z du point le plus radialement intérieur de l'élément circonférentiel de renforcement au point le plus radialement intérieur du bourrelet, et la largeur axiale du bourrelet au seat D, est au plus égal à 0.4,
dans ledit bourrelet, toute partie d'une couche de carcasse quelconque de l'armature de carcasse radialement intérieur au point le plus radialement extérieur de l'élément circonférentiel de renforcement, est axialement extérieur au point le plus radialement intérieur de l'élément circonférentiel de renforcement,
ledit bourrelet comprend une armature de talon, constituée d'au moins une couche de talon, qui entoure le bourrage, de telle sorte que l'extrémité la plus axialement extérieure de la couche de talon est radialement extérieure à l'extrémité la plus radialement intérieure de la couche de carcasse, et de telle sorte que l'extrémité la plus axialement intérieure de la couche de talon est au moins radialement extérieure au point le plus radialement intérieur de l'élément circonférentiel de renforcement.
pour ledit bourrelet comprenant une face externe, les points de l'armature de talon, positionnés radialement à l'intérieur du point le plus radialement intérieur de l'élément circonférentiel de renforcement, sont positionnés, par rapport à la face externe du bourrelet, à une distance mesurée perpendiculairement par rapport à la face externe du bourrelet, au plus égale à Z/2, la moitié de la distance radiale entre le point le plus radialement intérieur du bourrelet et le point le plus radialement intérieur de l'élément circonférentiel de renforcement.
pour ledit bourrelet, la portion de bourrage, au moins radialement intérieure au point le plus radialement intérieur de l'élément circonférentiel de renforcement, a un module d'élasticité à 10% d'allongement au moins égal à 15 MPa.

Pour un pneumatique pour lequel un sens de montage est imposé, une solution possible est de n'appliquer l'invention que sur un des bourrelets, celui qui est positionné côté extérieur véhicule. Le bourrelet situé côté intérieur du véhicule est en effet soit soumis à un effort très faible en raison des transferts de charge du véhicule en virage, soit soumis à un effort opposé au décoincement.

Dans le bourrelet selon l'art antérieur, le décoincement s'effectue sous un effort latéral s'exerçant sur le sommet qui tire sur la couche de carcasse passant sous l'élément circonférentiel de renforcement, qui est décoincée de la jante. La force principale s'opposant à cet effort est la pression intérieure au pneumatique. Dans le cas de pneumatiques faiblement gonflés, cette force peut s'avérer insuffisante en fonction des efforts transverses appliqués et particulièrement pour les véhicules de type sportif, qui roulent à des vitesses à la limite de d'adhérence des pneumatiques, ou ceux fortement chargés.

Pour augmenter l'effort latéral s'opposant au décoincement, l'homme de l'art dispose, intérieurement au point le plus radialement intérieur de la couche de carcasse la plus radialement intérieure, un coin de matériaux caoutchouteux dit pointe de gomme. Avec cette solution il augmente la largeur axiale D du bourrelet au seat. Cette pointe de gomme s'oppose par frottement au décoincement. Le point de contact entre la pointe de gomme et la jante devient le point de pivot autour duquel le bourrelet se déplace. Dans cette géométrie, le décoincement a lieu lorsque l'élément circonférentiel de renforcement passe axialement au-delà du point de pivot après avoir comprimé les matériaux situés entre la pointe de gomme et l'élément circonférentiel de renforcement.

La largeur axiale du bourrelet au seat D est la distance axiale entre le point le plus radialement intérieur du bourrelet et le point de raccordement entre le seat et le side du bourrelet. Le point de raccordement entre le seat et le side du bourrelet est le point d'intersection des deux droites du plan méridien, tangentes au contour du pneumatique ; une première droite tangente en la projection axiale extérieure du point le plus radialement intérieur de l'élément circonférentiel de renforcement, la deuxième droite tangente en la projection radiale intérieure du point le plus axialement extérieur de l'élément circonférentiel de renforcement. La largeur axiale du bourrelet au seat D est usuellement mesurée sur une coupe méridienne du pneumatique, obtenue par découpage du pneumatique selon deux plans méridiens. A titre d'exemple, une coupe méridienne de pneumatique a une épaisseur selon la direction circonférentielle d'environ 60 mm au niveau de la bande de roulement. La mesure se fait en maintenant la distance entre les deux bourrelets identique à celle du pneumatique monté sur sa jante et faiblement gonflé.

Pour un diamètre intérieur de l'élément circonférentiel de renforcement donné, plus la distance entre la pointe de gomme et l'élément circonférentiel de renforcement est importante plus l'effort de décoincement est important. Selon l'invention, positionner le point le plus radialement intérieur de l'élément circonférentiel de renforcement à une distance radiale Z et une distance axiale Y du point le plus radialement intérieur du bourrelet et telle que Y/D est au moins égal à 0.5 et Z/D est au plus égal à 0.4 permet de garantir un effort de décoincement minimal et ce à condition que le matériau situé entre ces deux points soit suffisamment rigide. De ce fait, la portion du bourrage radialement intérieure au point le plus radialement intérieur de l'élément circonférentiel de renforcement, doit avoir un module d'élasticité supérieur ou égal à 15 MPa

Une solution pour augmenter la rigidité de compression de cette dite portion de bourrage est de s'opposer à la déformation transversale induite, importante dans le cas des matériaux caoutchouteux. La solution proposée par l'invention est d'entourer l'ensemble de cette portion de bourrage par au moins une couche de renforts textiles, parallèles entre eux, et limitant ces déformations. Cette couche de renforts textiles est nommée couche de talon et l'ensemble de ces couches, armature de talon.

Pour diminuer les déplacements de l'élément circonférentiel de renforcement produit par la tension d'une couche de carcasse lors du décoincement, l'invention exclut toute partie d'une couche carcasse qui augmenterait sous tension une déformation de l'élément circonférentiel de renforcement propice au décoincement. De sorte que toute partie d'une couche de carcasse quelconque de l'armature de carcasse radialement intérieure au point le plus radialement extérieur de l'élément circonférentiel de renforcement, est axialement extérieure au point le plus radialement intérieur de l'élément circonférentiel de renforcement.

Pour limiter au mieux les déformations transversales induites, il convient que la couche de talon soit la plus extérieure possible au bourrelet sans toutefois être en contact avec la jante où ont lieu des phénomènes de frottement capables de d'endommager les renforts et de les rendre impropres à la fonction visée. De plus, il est impératif qu'il existe une couche de mélange entre le point le plus radialement intérieur de l'élément circonférentiel de renforcement et la couche de talon afin d'absorber facilement le passage du hump lors du montage. Comme le seat des pneumatiques est une droite presqu'axial ; que la distance entre la face extérieure et la couche de talon est inférieure à Z/2, la couche de matériaux caoutchouteux entre le point le plus radialement intérieur de l'élément circonférentiel de renforcement et la couche de talon est proche de Z/2.

Des gommes spécialement conçues pour résister au frottement sur une épaisseur jusqu'à Z/2, la moitié de la distance radiale entre le point le plus radialement intérieur du bourrelet et le point le plus radialement intérieur de l'élément circonférentiel de renforcement, pourront être utilisées pour protéger la couche de talon de ce phénomène d'usure. L'épaisseur de ces gommes de protection contre l'usure est à minimiser car elles sont plus compressibles que le mélange de bourrage du talon et cela diminue d'autant l'efficacité de l'invention. Selon l'invention, pour ledit bourrelet qui comprend une face externe, les points de l'armature de talon, positionnés radialement à l'intérieur du point le plus radialement intérieur de l'élément circonférentiel de renforcement, sont, par rapport à la face externe du bourrelet, à une distance maximale au plus égale à Z/2, la moitié de la distance radiale Z entre le point le plus radialement intérieur du bourrelet et le point le plus radialement intérieur de l'élément circonférentiel de renforcement, afin de s'opposer efficacement aux efforts de décoincement.

Pour garantir la géométrie et notamment la position de l'armature de talon vis-à-vis de la face externe du bourrelet pour la partie radialement intérieure au point le plus radialement intérieur de l'élément circonférentiel de renforcement, il est nécessaire de supprimer les mouvements de gomme de bourrage dus aux efforts s'appliquant sur l'armature de carcasse au cours du moulage du pneumatique. La solution proposée est de supprimer la présence de l'armature de carcasse dans le bourrelet et de solidariser le bourrelet et le flanc via une zone dite de recouvrement entre l'armature de carcasse et l'armature de talon.

De plus pour que l'armature de carcasse assure sa fonction de lien avec le sommet; son extrémité se situe radialement à l'intérieur du point de plus large section axiale du pneumatique. La largeur axiale maximale du pneumatique est mesurée au niveau des flancs, le pneumatique étant monté sur sa jante et faiblement gonflé, c'est-à-dire gonflé à une pression égale à 10% de la pression nominale telle que recommandée, par exemple, par la Tire and Rim Association ou TRA.

Le lien entre le bourrelet et le flanc s'effectue à l'aide d'une zone dite de recouvrement de la couche de talon et de la couche de carcasse et donc telle que l'extrémité de la couche de talon la plus axialement extérieure est radialement extérieure à l'extrémité de la couche de carcasse la plus radialement intérieure.

La liaison entre le bourrelet et le flanc se fait par le cisaillement des matériaux, généralement caoutchouteux, situés entre les éléments de renforcement de la couche de talon et de la couche de carcasse, dits gommes de cisaillement. L'épaisseur de ces dites gommes de cisaillement et la longueur du recouvrement déterminent l'équilibre de performance entre la rigidité latérale et l'endurance du pneumatique. Pour un pneumatique fonctionnant à basse pression, la longueur de cette zone de recouvrement est supérieure à 10 mm pour des épaisseurs des gommes de cisaillement minimales supérieures à 0,3 mm et inférieures à 2 mm. Pour augmenter l'endurance, une solution consiste à avoir une longueur de recouvrement supérieure à 20 mm.

L'élément circonférentiel de renforcement peut être réalisé soit à l'aide d'éléments de renforcement métalliques ou textiles concentriques enroulés en spirale ou tressés entre eux.

Dans un mode de réalisation préféré, le point le plus radialement intérieur de l'élément circonférentiel de renforcement est à une distance axiale Y du point le plus radialement intérieur du bourrelet telle que le rapport (Y/D) de cette dite distance axiale (Y) à la largeur axiale du bourrelet au seat (D) est au plus égal à 0,75. Car il est nécessaire de ne pas mettre en contact les éléments circonférentiels de renforcement avec la couche de talon afin de ne pas provoquer une usure de leurs constituants par frottement, ni de provoquer une fissuration de la composition caoutchouteuse du bourrage par cisaillement en raison d'une épaisseur trop peu importante de ce matériau entre les deux éléments de renforcement que sont la couche de talon et l'élément circonférentiel de renforcement.

Pour ces mêmes raisons, afin d'écarter les risques d'usure des éléments de renforcement ou de fissuration du bourrage au niveau du seat, Il est particulièrement avantageux que le point le plus radialement intérieur de l'élément circonférentiel de renforcement soit à une distance radiale (Z) du point le plus radialement intérieur du bourrelet telle que le rapport (Z/D) de cette dite distance radiale (Z) à la largeur axiale du bourrelet au seat (D) est au moins égal à 0,25.

Selon l'invention, la couche de carcasse où a lieu le recouvrement peut être soit axialement intérieure soit extérieure à la couche de talon participant au recouvrement.

Selon le nombre de couches de carcasse dans l'armature de carcasse et de couches de talon dans l'armature de talon, il est possible soit de se limiter à une unique longueur de recouvrement entre deux couches de chacune des armatures, soit de multiplier les longueurs de recouvrement en alternant une couche de carcasse et une couche de talon ou une couche de talon, deux couches de carcasse, une couche de talon. Il est possible de faire remonter la couche de talon jusque sous le sommet. Cette solution permet d'augmenter la rigidité des flancs du pneumatique pour répondre à des critères de dynamique du véhicule. Mais pour cela, la ou les couches de carcasse devront impérativement reprendre la totalité des tensions dans le sens radial liés au gonflage du pneumatique. L'homme de l'art dispose pour ce faire de solutions bien connues, comme par exemple la géométrie et le module des renforts constituant la couche de carcasse, en regard de celles constituant la couche de talon.

Pour faciliter la réalisation du pneumatique, un mode de réalisation préféré est tel que l'extrémité de couche de carcasse (311) est positionnée radialement à l'extérieur du point (223) le plus radialement extérieur de l'élément circonférentiel de renforcement (22).

Avantageusement les éléments de renforcement d'une couche de talon sont en textile, tels que les polyamides aliphatiques, les polyamides aromatiques ou d'une combinaison de polyamides aliphatiques et de polyamides aromatiques, les polytéréphtalates d'éthylène, la rayonne car ils s'adaptent facilement aux différentes géométries du bourrelet.

Il est encore avantageux que les éléments de renforcement d'une couche de carcasse soient en métal ou en textile, tels que les polyamides aliphatiques, les polyamides aromatiques ou d'une combinaison de polyamides aliphatiques et de polyamides aromatiques, les polytéréphtalates d'éthylène, la rayonne, selon la pression d'usage du pneumatique. Pour des pneumatiques dont la pression d'usage est inférieure à 1,5 bar, les armatures carcasse avec des éléments de renforcement en textile sont souvent préférées pour leur faible masse et leur facilité de mise en oeuvre. Pour des pneumatiques dont la pression d'usage est supérieure à 1,5 mais dont un des modes étendus prévoit un usage avec une pression inférieure à 1,5 bar, les armatures carcasse avec des éléments de renforcement en métal sont souvent préférées pour leur résistance à la compression et à la fatigue.

Selon un mode de réalisation particulier, les éléments de renforcement de la couche de carcasse sont parallèles entre eux et font avec la direction circonférentielle, un angle compris entre 65° et 115°, pour une performance en résistance au roulement et en confort bien connue.

Deux éléments de renforcement sont dits « parallèles » dans ce document lorsque l'angle formé entre les deux éléments est inférieur ou égal à 5°.

Selon un mode de réalisation préférentiel, une couche de talon comprend des éléments de renforcement parallèles entre eux et faisant avec la direction circonférentielle, un angle compris entre 20° et 160°, permettant un compromis intéressant entre la rigidité circonférentielle pour limiter l'usure au contact de la jante de montage et la rigidité en flexion pour limiter les déformations autour du crochet de jante, source d'une dissipation énergétique importante compte tenu de l'important volume de gomme présent dans le bourrelet. Par ailleurs, le choix de l'angle de la couche de talon dépend des rigidités que souhaite obtenir le concepteur du pneumatique notamment pour répondre à des critères de dynamique du véhicule. La position radiale des extrémités des couches de talon est également un paramètre intéressant de réglage des rigidités structurelles du pneumatique.

Préférentiellement, la portion de bourrage radialement extérieure au point le plus radialement extérieur de l'élément circonférentiel de renforcement, a un module d'élasticité à 10% d'allongement inférieur à 0.5 fois le module d'élasticité à 10% d'allongement de la portion de bourrage au moins radialement intérieure au point le plus radialement intérieur de l'élément circonférentiel de renforcement afin de favoriser la flexion sur le flanc par rapport au bourrelet et de limiter ainsi la dissipation d'énergie.

Pour ce même objectif de limitation de la dissipation d'énergie au roulage et pour faciliter la fabrication, il peut être préféré que la portion de bourrage, axialement extérieure au point le plus radialement extérieur de l'élément circonférentiel de renforcement, ait un module d'élasticité à 10% d'allongement inférieur à 0.5 fois le module d'élasticité à 10% d'allongement de la portion de bourrage au moins radialement intérieure au point le plus radialement intérieur de l'élément circonférentiel de renforcement.

L'ensemble monté, comprenant au moins une roue et un pneumatique, selon invention fonctionne d'autant mieux s'il comprend une roue possédant au moins un hump dont la hauteur est supérieure à 1 mm. Le hump permet le blocage du déplacement axial de la pointe de gomme du bourrelet en cas d'effort latéral et empêche tout glissement du point de contact entre la pointe de gomme et la jante obligeant ainsi le bourrelet à se déplacer autour de celui-ci. Le hump est un terme connu de l'homme du métier désignant une « bosse » sur la portée du talon de jante d'une roue. Les jantes pour pneumatiques de voitures de tourisme sont très fréquemment munies d'un hump.

### BREVE DESCRIPTION DES DESSINS

Les caractéristiques et autres avantages de l'invention seront mieux compris à l'aide des figures 1 à 12, les dites figures n'étant pas représentées à l'échelle mais de façon simplifiée, afin de faciliter la compréhension de l'invention :
- La figure 1 représente un pneumatique selon l'art antérieur.
- La figure 2 illustre les termes 'bord intérieur' et 'bord extérieur' d'une bande de roulement.
- Les figures 3 à 8 représentent le déplacement du flanc d'un pneumatique en fonction de l'effort appliqué au flanc du pneumatique lors d'un essai de décoincement.
- La figure 9 représente la coupe méridienne du bourrelet et du flanc selon l'invention. La figure 9 illustre notamment les distances Y et Z et la largeur axiale du bourrelet au seat D.
- Les figures 10 et 11 représentent la coupe méridienne du bourrelet et du flanc selon l'invention et des répartitions préférées des gommes de bourrage
- La figure 12 représente les déplacements des flancs d'un pneumatique selon l'invention et d'un pneumatique selon l'état de la technique en fonction de l'effort appliqué au flanc des pneumatiques lors d'un essai de décoincement.

### DESCRIPTION DETAILLEE DES DESSINS

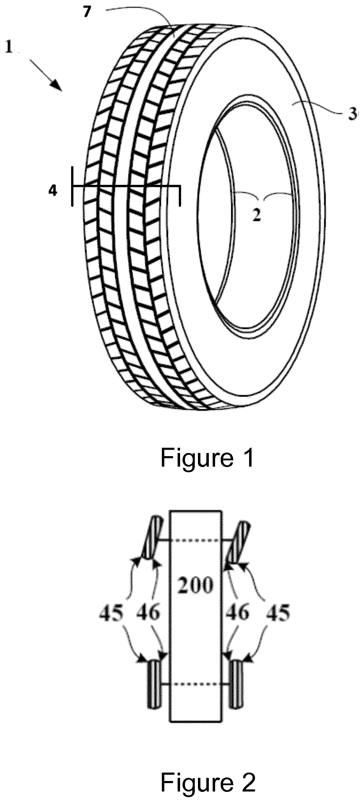

La figure 1 représente schématiquement un pneumatique 1 selon l'art antérieur. Le pneumatique 1 comporte un sommet 4 comprenant une armature de sommet (invisible sur la figure) surmontée d'une bande de roulement 7, deux flancs 3 prolongeant le sommet radialement vers l'intérieur, ainsi que deux bourrelets 2 radialement intérieurs aux flancs 3.

La figure 2 représente schématiquement des pneumatiques destinés à être montés sur des jantes de montage de roues d'un véhicule 200 et ayant un sens de montage prédéterminé sur le véhicule. Il comporte un bord axial extérieur 45 et un bord axial intérieur 46, le bord axial extérieur 46 étant le bord destiné à être monté du côté de la caisse du véhicule lorsque le pneumatique est monté sur le véhicule selon ledit sens de montage prédéterminé et inversement pour le bord axial extérieur 45. Dans le document « côté extérieur du véhicule » désigne le bord axial extérieur 45.

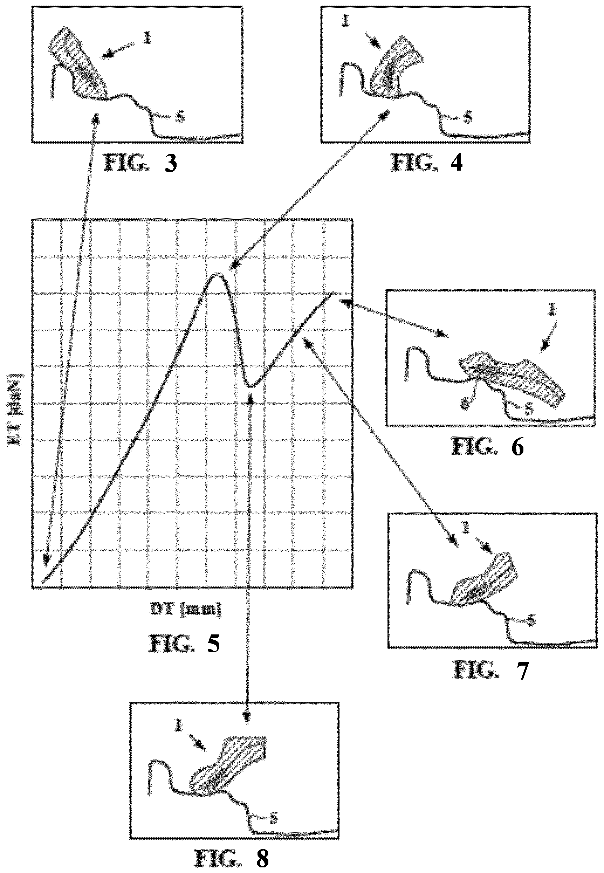

Le graphe représenté à la figure 5 montre le résultat d'une simulation numérique d'un essai de décoincement selon la norme chinoise GB/T 4502-2009. Une forme conique est appliquée contre le flanc du pneumatique. Cette forme conique avance à une vitesse déterminée. L'effort ET requis pour faire avancer la forme conique à cette vitesse est tracé en fonction du déplacement DT de la forme conique.

La situation initiale du pneumatique 1 (dont seuls le bourrelet et une partie du flanc sont représentés) sur sa jante de montage 5 est représentée à la figure 3.

Lorsque la forme conique se déplace, la résistance du pneumatique se manifeste dans l'augmentation quasiment linéaire de l'effort ET. Le bourrelet commence à se déplacer jusqu'au point où il commence à basculer. C'est la situation représentée à la figure 4. Ce basculement fait chuter l'effort nécessité pour faire avancer la forme conique, jusqu'à ce que le bourrelet ait complètement basculé, comme cela est représenté à la figure 8. Ensuite, l'effort augmente de nouveau, car il s'agit de faire monter le bourrelet sur le « hump » 6 de la jante de montage 5, comme cela est montré à la figure 7. C'est seulement lorsque le bourrelet a surmonté le « hump » 6 (situation représentée à la figure 6) que le décoincement est achevé.

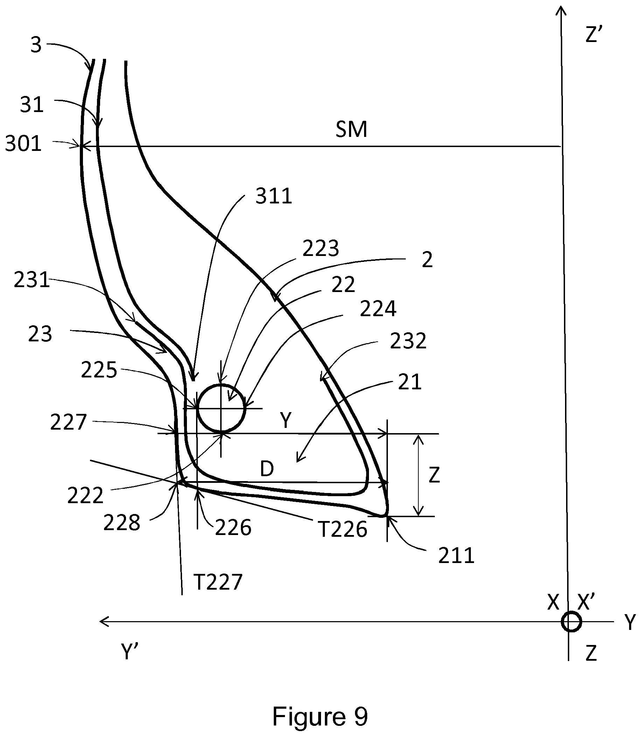

La figure 9 représente schématiquement, la coupe méridienne, d'un bourrelet 2 et d'une partie du flanc 3 selon l'invention. Le pneumatique 1 comporte deux bourrelets 2 destinés à entrer en contact avec une jante de montage (non représentée). Au moins le bourrelet 2 et le flanc 3 positionnés côté extérieur du véhicule (cf. figure 2) comportent :
- Un élément circonférentiel de renforcement 22 dont le point le plus radialement intérieur 222 est placé à une distance radiale Z du point 211 le plus radialement intérieur du pneumatique et à une distance axiale Y de ce même point.
- Une armature de carcasse comportant au moins une couche de carcasse 31 dont l'extrémité 311 se situe radialement à l'extérieur du point 223 le plus radialement extérieur de l'élément circonférentiel de renforcement 22 et radialement à l'intérieur du point 301 de plus grande largeur du pneumatique. L'extrémité 311 de la couche de carcasse est également axialement à l'extérieur du point 224 le plus axialement intérieur de l'élément circonférentiel de renforcement
- Une armature de talon comportant au moins une couche de talon 23 dont l'extrémité la plus axialement extérieure 231 est radialement extérieure à l'extrémité 311 de la couche de carcasse 31 et dont l'extrémité la plus axialement intérieure 232 est radialement extérieure au point 222, le plus radialement intérieur de l'élément circonférentiel de renforcement.
- Le point 225 le plus axialement extérieur de l'élément circonférentiel de renforcement 22 et sa projection 226 radiale intérieure sur le contour du pneumatique et la tangente T226 au contour du pneumatique en ce point 226 ou seat du bourrelet.
- Le point 222 le plus radialement intérieur de l'élément circonférentiel de renforcement et sa projection 227 axiale extérieure sur le contour du pneumatique et la tangente T227 au contour du pneumatique en ce point 227, ou side du bourrelet.
- L'intersection de ces 2 tangentes T226 et T227 au point 228, point de raccordement entre le seat et le side du bourrelet.
- La largeur axiale du bourrelet au seat D, égale à la distance axiale entre le point le plus radialement intérieur 211 et le point 228 de raccordement entre le seat et le side du bourrelet.

Le bourrelet 2 représenté à la figure 9 comporte en outre une portion destinée à entrer en contact avec la jante de montage (non représentée).

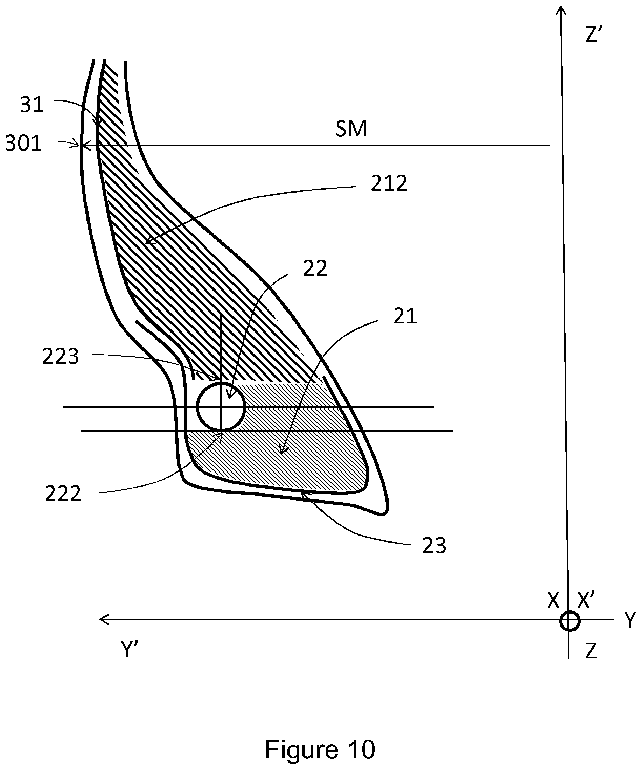

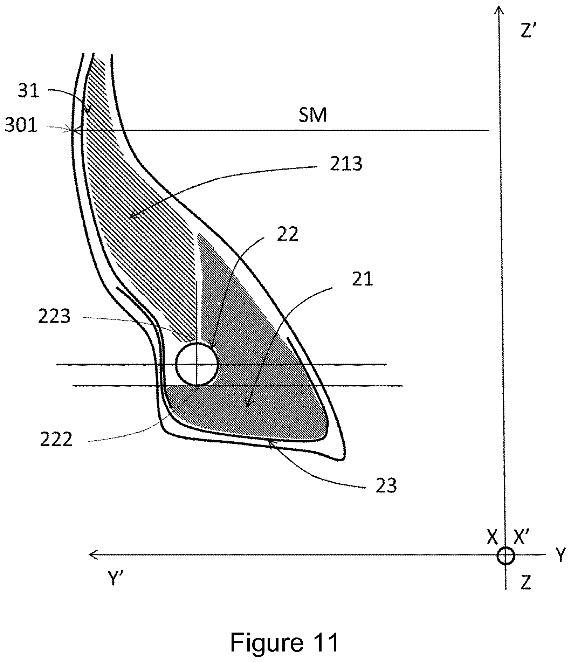

Les figures 10 et 11 illustrent les différentes configurations préférées des portions de bourrages 21, 212 et 213. La portion de bourrage 21 est au moins radialement intérieure au point 222 le plus radialement intérieur de l'élément circonférentiel de renforcement 22. La portion de bourrage 212 est radialement extérieure au point 223 le plus radialement extérieur de l'élément circonférentiel de renforcement (figure 10). La portion de bourrage 213 axialement extérieur au point 223 (figure 11).

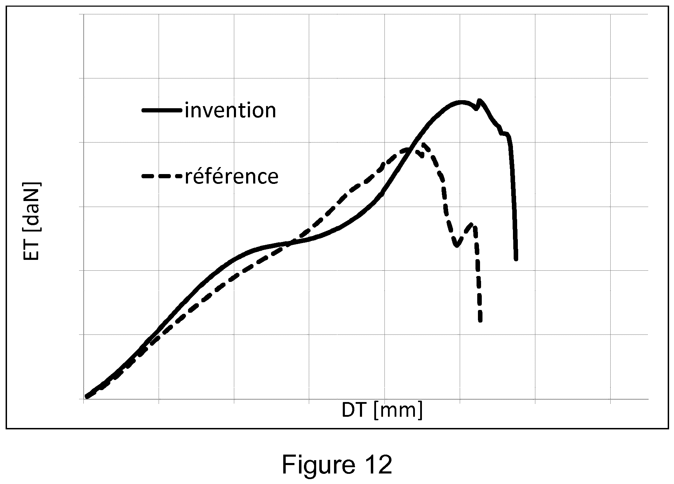

La figure 12 montre l'effort ET requis pour faire avancer la forme conique du test de décoincement selon la norme chinoise GB/T 4502-2009 en fonction du déplacement DT de la forme conique entre un pneumatique selon l'invention et un pneumatique selon l'art antérieur. Le gain amené par l'invention pour provoquer un décoincement, se mesure en effort entre les maxima des deux courbes sur l'axe des ordonnées et en déplacement, entre les abscisses de ces deux maxima.

Les inventeurs ont réalisé l'invention sur un pneumatique de dimension 335/30_ZR_18, ayant une armature de carcasse constituée de deux couches de carcasse de polyester faisant un angle de +/-85° avec la direction radiale, une couche de talon en aramide faisant un angle de 55° avec la direction radiale, un élément circonférentiel de renforcement constitué de câbles métalliques tressés de section 10.6 mm2, le module d'élasticité à 10% d'allongement du bourrage 21 est égal à 54MPa et celui du bourrage 213 à 23MPa. Le positionnement de l'élément circonférentiel de renforcement est tel que Y = 8.5mm, Z= 5mm, D=15.5mm, Y/D = 0.55, Z/D = 0.33. La longueur de recouvrement entre la couche de carcasse et la couche de talon est égale à 25mm ; la position radiale de l'extrémité de la couche de carcasse est égale à la position radiale du point le plus radialement extérieur de l'élément circonférentiel de renforcement ; l'épaisseur moyenne de la gomme de protection du renfort talon est de 1,5 mm, l'épaisseur de gomme entre la couche de talon et le point le plus radialement intérieur de l'élément circonférentiel de renforcement est de 3 mm.

Comparativement à la solution antérieure 335/30_ZR_18, ayant une armature de carcasse constituée de deux couches de carcasse de polyester faisant un angle de +/-85° avec la direction radiale, un élément circonférentiel de renforcement de câbles métalliques tressés de section 17mm2, un bourrage tringle dont le module d'élasticité est égal à 23MPa, et une pointe de gomme dont le module d'élasticité à 10% d'allongement est égal à 23 MPa; Le positionnement de l'élément circonférentiel de renforcement est tel que Y=7mm, Z = 8mm, D = 16mm Y/D = 0.43 Z/D = 0.5. La liaison mécanique entre le bourrelet et la carcasse se fait par un retournement de la carcasse autour de l'élément circonférentiel de renforcement. La méthode de test est similaire à celle préconisée dans la norme chinoise GB/T 4502-2009. Le test est effectué à une pression de 0,7 bar. L'effort nécessaire pour provoquer le décoincement dans le test est augmenté de 18%, le déplacement du flanc est en augmentation de 19% quand la pression nécessaire au franchissement des humps de la jante lors du montage est abaissée de 50% montrant ainsi que la montabilité est non seulement conservée mais en plus améliorée.

Le renfort talon assure de plus une fonction de protection ; une blessure dudit renfort reste localisée et n'a pas d'impact sur la pérennité de l'armature de carcasse.

## Revendications

1. Pneumatique (1) destiné à être monté sur une jante de montage, comprenant :
deux bourrelets (2), destinés à entrer en contact avec la jante de montage, la jante de montage comprenant une portion sensiblement radiale ou side et une portion sensiblement axiale ou seat,
chaque bourrelet (2), ayant un point (211) le plus radialement intérieur et positionné par rapport au side à une distance axiale D appelée largeur axiale au seat, et comportant au moins un bourrage (21) constitué par au moins une composition caoutchouteuse et au moins un élément circonférentiel de renforcement (22),
la section méridienne de l'élément circonférentiel de renforcement (22) ayant un point (222) le plus radialement intérieur, un point (223) le plus radialement extérieur et un point (224) le plus axialement intérieur, le point (222) le plus radialement intérieur étant positionné à une distance radiale Z et à une distance axiale Y du point (211) le plus radialement intérieur du bourrelet,
une armature de carcasse reliant les deux bourrelets (2) et comprenant au moins une couche de carcasse (31) s'étendant dans chaque bourrelet (2), radialement vers l'intérieur, jusqu'à une extrémité de couche de carcasse (311),
pour au moins un bourrelet (2), l'extrémité de couche de carcasse (311) est positionnée radialement à l'intérieur du point (301) de plus grande largeur axiale (SM) du pneumatique et axialement à l'extérieur du point (224) le plus axialement intérieur de l'élément circonférentiel de renforcement (22),
le au moins un bourrelet (2) comprend une armature de talon (23), constituée d'au moins une couche de talon (23), qui entoure le bourrage (21), de telle sorte que l'extrémité (231) la plus axialement extérieure de la couche de talon (23) est radialement extérieure à l'extrémité (311) la plus radialement intérieure de la couche de carcasse (31), et de telle sorte que l'extrémité (232) la plus axialement intérieure de la couche de talon (23) est au moins radialement extérieure au point (222) le plus radialement intérieur de l'élément circonférentiel de renforcement (22), où dans ledit bourrelet, toute partie d'une couche de carcasse (31) quelconque de l'armature de carcasse radialement intérieure au point le plus radialement extérieur (223) de l'élément circonférentiel de renforcement (22), est axialement extérieure au point le plus radialement intérieur (222) de l'élément circonférentiel de renforcement (22),
**caractérisé en ce que,** pour ledit bourrelet (2), le rapport Y/D entre la distance axiale Y du point (222) le plus radialement intérieur de l'élément circonférentiel de renforcement (22) au point (211) le plus radialement intérieur du bourrelet (2), et la largeur axiale du bourrelet au seat D, est au moins égal à 0,5,
**en ce que,** pour ledit bourrelet (2), le rapport Z/D entre la distance radiale Z du point (222) le plus radialement intérieur de l'élément circonférentiel de renforcement (22) au point (211) le plus radialement intérieur du bourrelet (2), et la largeur axiale du bourrelet au seat D, est au plus égal à 0.4,
**en ce que,** pour ledit bourrelet (2) comprenant une face externe, les points de l'armature de talon (23), positionnés radialement à l'intérieur du point (222) le plus radialement intérieur de l'élément circonférentiel de renforcement (22), sont positionnés, par rapport à la face externe du bourrelet (2), à une distance, mesurée perpendiculairement par rapport à la face externe du bourrelet (2), au plus égale à Z/2, la moitié de la distance radiale Z entre le point le plus radialement intérieur du bourrelet (211) et le point (222) le plus radialement intérieur de l'élément circonférentiel de renforcement (22)
**et en ce que,** pour ledit bourrelet (2), le bourrage (21) comprend une portion de bourrage au moins radialement intérieure au point (222) le plus radialement intérieur de l'élément circonférentiel de renforcement (22), ayant un module d'élasticité à 10% d'allongement E21 au moins égal à 15 MPa.

2. Pneumatique selon la revendication 1, dans lequel le rapport Y/D entre la distance axiale Y du point (222) le plus radialement intérieur de l'élément circonférentiel de renforcement (22) au point (211) le plus radialement intérieur du bourrelet (2), et la largeur axiale du bourrelet au seat D est au plus égal à 0.75.

3. Pneumatique selon l'une des revendications 1 ou 2, dans lequel le rapport Z/D entre la distance radiale Z du point (222) le plus radialement intérieur de l'élément circonférentiel de renforcement (22) au point (211) le plus radialement intérieur du bourrelet (2), et la largeur axiale du bourrelet au seat D, est au moins égal à 0.25.

4. Pneumatique selon l'une quelconque des revendications 1 à 3, **dans lequel** l'extrémité (231) la plus axialement extérieure de la couche de talon (23) est radialement extérieure à l'extrémité (311) la plus radialement intérieure de la couche de carcasse (31) d'une différence de rayon au moins égale à 10 mm, de préférence au moins égale à 20 mm.

5. Pneumatique selon l'une quelconque des revendications 1 à 4, **dans lequel** l'extrémité (231) de la couche de talon (23) la plus axialement extérieure est axialement extérieure à l'extrémité (311) de la couche de carcasse (31) la plus radialement intérieure.

6. Pneumatique selon l'une quelconque des revendications 1 à 4, **dans lequel** l'extrémité (231) de la couche de talon (23) la plus axialement extérieure est axialement intérieure à l'extrémité (311) de la couche de carcasse (31) la plus radialement intérieure.

7. Pneumatique selon l'une quelconque des revendications 1 à 6, **dans lequel** l'extrémité de couche de carcasse (311) est positionnée radialement à l'extérieur du point (223) le plus radialement extérieur de l'élément circonférentiel de renforcement (22).

8. Pneumatique selon l'une quelconque des revendications 1 à 7, dans lequel les éléments de renforcement d'une couche de talon (23) sont en textile, de préférence en polyamide aliphatique, en polyamide aromatique, en une combinaison de polyamide aliphatique et de polyamide aromatique, en polytéréphtalate d'éthylène ou en rayonne.

9. Pneumatique selon l'une quelconque des revendications 1 à 8, **dans lequel** les éléments de renforcement d'une couche de carcasse (31) sont en métal ou en textile, de préférence en polyamide aliphatique, en polyamide aromatique, en une combinaison de polyamide aliphatique et de polyamide aromatique, en polytéréphtalate d'éthylène ou en rayonne.

10. Pneumatique selon l'une quelconque des revendications 1 à 9, **dans lequel** les éléments de renforcement d'une couche de carcasse (31) sont parallèles entre eux et font, avec la direction circonférentielle, un angle compris entre 65° et 115°.

11. Pneumatique selon l'une quelconque des revendications 1 à 10, **dans lequel** les éléments de renforcement d'une couche de talon (23) sont parallèles entre eux et font, avec la direction circonférentielle, un angle compris entre 20° et 160°.

12. Pneumatique selon l'une quelconque des revendications 1 à 11, **dans lequel** la portion de bourrage (212) radialement extérieure au point (223) le plus radialement extérieur de l'élément circonférentiel de renforcement (22), a un module d'élasticité à 10% d'allongement E212 inférieur à 0.5 fois le module d'élasticité à 10% d'allongement E21 de la portion de bourrage (21) au moins radialement intérieure au point (222) le plus radialement intérieur de l'élément circonférentiel de renforcement (22).

13. Pneumatique selon l'une quelconque des revendications 1 à 11, **dans lequel** la portion de bourrage (213), axialement extérieure au point (223) le plus radialement extérieur de l'élément circonférentiel de renforcement (22), a un module d'élasticité à 10% d'allongement E213 inférieur à 0.5 fois le module d'élasticité à 10% d'allongement E21 de la portion de bourrage (21) au moins radialement intérieure au point (222) le plus radialement intérieur de l'élément circonférentiel de renforcement (22).

14. Ensemble monté comprenant un pneumatique selon l'une quelconque des revendications 1 à 13, et une roue possédant au moins un hump dont la hauteur est au moins égale à 1mm.

## Patentansprüche

1. Luftreifen (1), der dazu bestimmt ist, auf eine Montagefelge montiert zu werden, und Folgendes umfasst:
zwei Wulste (2), die dazu bestimmt sind, mit der Montagefelge in Kontakt zu treten, wobei die Montagefelge einen im Wesentlichen radialen Abschnitt oder eine Seite ("side") und einen im Wesentlichen axialen Abschnitt oder einen Sitz ("seat") aufweist,
wobei jeder Wulst (2) einen radial innersten Punkt (211) besitzt, der in Bezug auf die Seite in einem axialen Abstand D positioniert ist, der axiale Breite am Sitz genannt wird, und wenigstens einen Füller (21) aufweist, der durch wenigstens eine kautschukartige Zusammensetzung und wenigstens ein Verstärkungsumfangselement (22) gebildet ist,
wobei der Meridianabschnitt des Verstärkungsumfangselements (22) einen radial innersten Punkt (222), einen radial äußersten Punkt (223) und einen axial innersten Punkt (224) besitzt, wobei der radial innerste Punkt (222) in einem radialen Abstand Z und in einem axialen Abstand Y von dem radial innersten Punkt (211) des Wulstes positioniert ist,
eine Karkassenbewehrung die die beiden Wulste (2) verbindet und wenigstens eine Karkassenschicht (31) aufweist, die sich in jedem Wulst (2) radial einwärts bis zu einem Karkassenschichtende (311) erstreckt,
wobei für wenigstens einen Wulst (2) das Karkassenschichtende (311) radial innerhalb des Punkts (301) mit der axial größten Breite (SM) des Luftreifens und axial außerhalb des axial innersten Punkts (224) des Verstärkungsumfangselements (22) positioniert ist,
wobei der wenigstens eine Wulst (2) eine Vorsprungsbewehrung (23) aufweist, die aus wenigstens einer Vorsprungsschicht (23) gebildet ist, den Füller (21) umgibt, derart, dass sich das axial äußerste Ende (231) der Vorsprungsschicht (23) radial außerhalb des radial innersten Endes (311) der Karkassenschicht (31) befindet, und derart, dass sich das axial innerste Ende (232) der Vorsprungsschicht (23) wenigstens radial außerhalb des radial innersten Punkts (222) des Verstärkungsumfangselements (22) befindet, wobei sich in dem Wulst jeder beliebige Teil einer Karkassenschicht (31) der Karkassenbewehrung radial innerhalb des radial äußersten Punkts (223) des Verstärkungsumfangselements axial außerhalb des radial innersten Punkts (222) des Verstärkungsumfangselements (22) befindet,
**dadurch gekennzeichnet, dass** für den Wulst (2) das Verhältnis Y/D zwischen dem axialen Abstand Y des radial innersten Punkts (222) des Verstärkungsumfangselements (22) zu dem radial innersten Punkt (211) des Wulstes (2) und der axialen Breite D des Wulstes am Sitz wenigstens gleich 0,5 ist,
dass für den Wulst (2) das Verhältnis Z/D zwischen dem radialen Abstand Z des radial innersten Punkts (222) des Verstärkungsumfangselements (22) zu dem radial innersten Punkt (211) des Wulstes (2) und der axialen Breite D des Wulstes am Sitz höchstens gleich 0,4 ist,
dass für den Wulst (2), der eine Außenfläche besitzt, die Punkte der Vorsprungsbewehrung (23), die radial innerhalb des radial innersten Punkts (222) des Verstärkungsumfangselements (22) positioniert sind, in Bezug auf die Außenfläche des Wulstes (2) in einem Abstand positioniert sind, der senkrecht zu der Außenfläche des Wulstes (2) gemessen wird und höchstens gleich Z/2 ist, was die Hälfte des radialen Abstands Z zwischen dem radial innersten Punkt (211) des Wulstes und dem radial innersten Punkt (222) des Verstärkungsumfangselements (22) ist,
und dass für den Wulst (2) der Füller (21) einen Füllerabschnitt aufweist, der sich wenigstens radial innerhalb des radial innersten Punkts (222) des Verstärkungsumfangselements (22) befindet und einen Elastizitätsmodul E21 bei 10 % Streckung besitzt, der wenigstens gleich 15 MPa ist.

2. Luftreifen nach Anspruch 1, wobei das Verhältnis Y/D zwischen dem axialen Abstand Y des radial innersten Punkts (222) des Verstärkungsumfangselements (22) zu dem radial innersten Punkt (211) des Wulstes (2) und der axialen Breite D des Wulstes am Sitz höchstens gleich 0,75 ist.

3. Luftreifen nach einem der Ansprüche 1 oder 2, wobei das Verhältnis Z/D zwischen dem radialen Abstand Z von dem radial innersten Punkt (222) des Verstärkungsumfangselements (22) zu dem radial innersten Punkt (211) des Wulstes (2) und der axialen Breite D des Wulstes am Sitz wenigstens gleich 0,25 ist.

4. Luftreifen nach einem der Ansprüche 1 bis 3, wobei sich das axial äußerste Ende (231) der Vorsprungsschicht (23) radial außerhalb des radial innersten Endes (311) der Karkassenschicht (31) befindet, mit einer Radiusdifferenz, die wenigstens gleich 10 mm, vorzugsweise wenigstens gleich 20 mm ist, befindet.

5. Luftreifen nach einem der Ansprüche 1 bis 4, wobei sich das axial äußerste Ende (231) der Vorsprungsschicht (23) axial außerhalb des radial innersten Endes (311) der Karkassenschicht (31) befindet.

6. Luftreifen nach einem der Ansprüche 1 bis 4, wobei sich das axial äußerste Ende (231) der Vorsprungsschicht (23) axial innerhalb des radial innersten Endes (311) der Karkassenschicht (31) befindet.

7. Luftreifen nach einem der Ansprüche 1 bis 6, wobei sich das Karkassenschichtende (311) radial außerhalb des radial äußersten Punkts (223) des Verstärkungsumfangselements (22) befindet.

8. Luftreifen nach einem der Ansprüche 1 bis 7, wobei die Verstärkungselemente einer Vorsprungsschicht (23) aus einer Textilie, vorzugsweise aus aliphatischem Polyamid, aus aromatischem Polyamid, aus einer Kombination von aliphatischem Polyamid und aromatischem Polyamid, aus Ethylenpolyterephthalat oder aus Rayon hergestellt sind.

9. Luftreifen nach einem der Ansprüche 1 bis 8, wobei die Verstärkungselemente einer Karkassenschicht (31) aus Metall oder aus einer Textilie, vorzugsweise aus aliphatischem Polyamid, aus aromatischem Polyamid, aus einer Kombination von aliphatischem Polyamid und aromatischem Polyamid, aus Ethylenpolyterephthalat oder aus Rayon hergestellt sind.

10. Luftreifen nach einem der Ansprüche 1 bis 9, wobei die Verstärkungselemente einer Karkassenschicht (31) zueinander parallel sind und mit der Umfangsrichtung einen Winkel im Bereich von 65° bis 115° bilden.

11. Luftreifen nach einem der Ansprüche 1 bis 10, wobei die Verstärkungselemente einer Vorsprungsschicht (23) zueinander parallel sind und mit der Umfangsrichtung einen Winkel im Bereich von 20° bis 160° bilden.

12. Luftreifen nach einem der Ansprüche 1 bis 11, wobei der Füllerabschnitt (212), der sich radial außerhalb des radial äußersten Punkts (223) des Verstärkungsumfangselements (22) befindet, einen Elastizitätsmodul E212 bei einer Streckung von 10 % besitzt, der kleiner ist als der 0,5-fache Elastizitätsmodul E21 bei einer Streckung von 10 % des Füllerabschnitts 21, der sich wenigstens radial innerhalb des radial innersten Punkts (222) des Verstärkungsumfangselements (22) befindet.

13. Luftreifen nach einem der Ansprüche 1 bis 11, wobei der Füllerabschnitt (213), der sich axial außerhalb des radial äußersten Punkts (223) des Verstärkungsumfangselements (22) befindet, einen Elastizitätsmodul E213 bei einer Streckung von 10 % besitzt, der kleiner ist als der 0,5-fache Elastizitätsmodul E21 bei einer Streckung von 10 % des Füllerabschnitts (21), der sich radial außerhalb des radial innersten Punkts (222) des Verstärkungsumfangselements (22) befindet.

14. Montierte Anordnung, die einen Luftreifen nach einem der Ansprüche 1 bis 13 und ein Rad, das wenigstens einen Hump besitzt, dessen Höhe wenigstens gleich 1 mm ist, umfasst.

## Claims

1. Tyre (1) intended to be mounted on a mounting rim, comprising:
two beads (2), which are intended to come into contact with the mounting rim, the mounting rim comprising a substantially radial portion or side and a substantially axial portion or seat,
each bead (2) having a radially innermost point (211) positioned with respect to the side at an axial distance D referred to as the axial width at the seat and comprising at least one bead filler (21) made up of at least one rubber composition and of at least one circumferential reinforcing element (22),
the meridian section of the circumferential reinforcing element (22) having a radially innermost point (222), a radially outermost point (223) and an axially innermost point (224), the radially innermost point (222) being positioned at a radial distance Z and at an axial distance Y from the radially innermost point (211) of the bead,
a carcass reinforcement connecting the two beads (2) and comprising at least one carcass layer (31) extending in each bead (2) radially towards the inside as far as a carcass layer end (311),
for at least one bead (2), the carcass layer end (311) is positioned radially on the inside of the point (301) of greatest axial width (SM) of the tyre and axially on the outside of the axially innermost point (224) of the circumferential reinforcing element (22),
the at least one bead (2) comprises a bead reinforcement (23), made up of at least one bead layer (23), which surrounds the bead filler (21) in such a way that the axially outermost end (231) of the bead layer (23) is radially on the outside of the radially innermost end (311) of the carcass layer (31) and such that the axially innermost end (232) of the bead layer (23) is at least radially on the outside of the radially innermost point (222) of the circumferential reinforcing element (22),
**where,** in the said bead, any part of any arbitrary carcass layer (31) of the carcass reinforcement radially inside of the radially outermost point (223) of the circumferential reinforcing element (22) is axially on the outside of the radially innermost point (222) of the circumferential reinforcing element (22),
**characterized in that,** for the said bead (2), the ratio Y/D between the axial distance Y from the radially innermost point (222) of the circumferential reinforcing element (22) to the radially innermost point (211) of the bead (2), and the axial width of the bead at the seat D, is at least equal to 0.5,
**in that,** for the said bead (2), the ratio Z/D between the radial distance Z from the radially innermost point (222) of the circumferential reinforcing element (22) to the radially innermost point (211) of the bead (2), and the axial width of the bead at the seat D, is at most equal to 0.4,
**in that,** for the said bead (2) comprising an external face, the points on the bead reinforcement (23) which are positioned radially on the inside of the radially innermost point (222) of the circumferential reinforcing element (22) are positioned, with respect to the external face of the bead (2), at a distance, measured perpendicular to the external face of the bead (2), that represents at most Z/2, half the radial distance Z between the radially innermost point of the bead (211) and the radially innermost point (222) of the circumferential reinforcing element (22),
**and in that,** for the said bead (2), the bead filler (21) comprises a bead filler portion at least radially on the inside of the radially innermost point (222) of the circumferential reinforcing element (22), having an elastic modulus at 10% elongation E21 at least equal to 15 MPa.

2. Tyre according to Claim 1, **in which** the ratio Y/D between the axial distance Y from the radially innermost point (222) of the circumferential reinforcing element (22) to the radially innermost point (211) of the bead (2), and the axial width of the bead at the seat D is at most equal to 0.75.

3. Tyre according to one of Claims 1 and 2, **in which** the ratio Z/D between the radial distance Z from the radially innermost point (222) of the circumferential reinforcing element (22) to the radially innermost point (211) of the bead (2), and the axial width of the bead at the seat D is at least equal to 0.25.

4. Tyre according to any one of Claims 1 to 3, **in which** the axially outermost end (231) of the bead layer (23) is radially on the outside of the radially innermost end (311) of the carcass layer (31) by a difference in radius at least equal to 10 mm, preferably at least equal to 20 mm.

5. Tyre according to any one of Claims 1 to 4, **in which** the end (231) of the axially outermost bead layer (23) is axially on the outside of the end (311) of the radially innermost carcass layer (31).

6. Tyre according to any one of Claims 1 to 4, **in which** the end (231) of the axially outermost bead layer (23) is axially on the inside of the end (311) of the radially innermost carcass layer (31).

7. Tyre according to any one of Claims 1 to 6, **in which** the end of the carcass layer (311) is positioned radially on the outside of the radially outermost point (223) of the circumferential reinforcing element (22).

8. Tyre according to any one of Claims 1 to 7, **in which** the reinforcing elements of a bead layer (23) are made of textile, preferably of aliphatic polyamide, of aromatic polyamide, of a combination of aliphatic polyamide and of aromatic polyamide, of polyethylene terephthalate or of rayon.

9. Tyre according to any one of Claims 1 to 8, **in which** the reinforcing elements of a carcass layer (31) are made of metal or of textile, preferably of aliphatic polyamide, of aromatic polyamide, of a combination of aliphatic polyamide and of aromatic polyamide, of polyethylene terephthalate or of rayon.

10. Tyre according to any one of Claims 1 to 9, **in which** the reinforcing elements of a carcass layer (31) are parallel to one another and make with the circumferential direction an angle of between 65° and 115°.

11. Tyre according to any one of Claims 1 to 10, **in which** the reinforcing elements of a bead layer (23) are parallel to one another and make with the circumferential direction an angle of between 20° and 160°.

12. Tyre according to any one of Claims 1 to 11, **in which** the bead filler portion (212) radially on the outside of the radially outermost point (223) of the circumferential reinforcing element (22) has an elastic modulus at 10% elongation E212 less than 0.5 times the elastic modulus at 10% elongation E21 of the bead filler portion (21) at least radially on the inside of the radially innermost point (222) of the circumferential reinforcing element (22).

13. Tyre according to any one of Claims 1 to 11, **in which** the bead filler portion (213) axially on the outside of the radially outermost point (223) of the circumferential reinforcing element (22) has an elastic modulus at 10% elongation E213 less than 0.5 times the elastic modulus at 10% elongation E21 of the bead filler portion (21) at least radially on the inside of the radially innermost point (222) of the circumferential reinforcing element (22).

14. Mounted assembly comprising a tyre according to any one of Claims 1 to 13 and a wheel possessing at least one hump the height of which is at least equal to 1 mm.
